# EUROPEAN PATENT APPLICATION

(11) **EP 1 876 421 A1**
(43) Date of publication of application: **09.01.2008**
(21) Application number: 06712510.4
(22) Date of filing: 27.01.2006
(51) Int. Cl.: G01C 21/30, G08G 1/0969

(54) **NAVIGATION DEVICE**

(30) Priority: 27.04.2005 JP 2005129295
(71) Applicant: MATSUSHITA ELECTRIC INDUSTRIAL CO., LTD., Osaka 571-8501 (JP)
(72) Inventor: WATANABE, H. Matsushita Electric Industrial Co,Ltd, Osaka-shi, Osaka 540-6319 (JP); MUTO,Isanor Matsushita Electric Industrial Co.Ltd, Osaka-shi, Osaka 540-6319 (JP)
(74) Representative: Pautex Schneider, Nicole Véronique
(86) International application number: PCT/JP2006/301344
(87) International publication number: WO 2006/117905

(57) **Abstract**

The present invention aims at making it possible to display usefully a facility image to a user. Map data in which the roads or the facilities are correlated with location data, facility image data corresponding to facility images, road map data corresponding to road maps, switch image data corresponding to switch images, etc. are stored in a HDD 12. Also, an image display program for causing a CPU 14 to function as a control portion that controls whether or not the facility image should be displayed on a display 32, in response to operation data output from an operation panel 21 in a situation that the location data has a plurality of corresponding destinations on the map data is stored in the HDD 12.

## Description

### Technical Field

The present invention relates to a navigation apparatus for causing a display to display an image of the facility ahead of the user's present location and, more particularly, an onboard multimedia terminal, a cellular phone, or the like.

### Background Art

As the background art, such a navigation apparatus is known that, when the user's present location gets close to the public utility, a detailed map of the neighborhood of the utility is displayed on a screen instead of a common map image whereas, when the user's present location goes away from the utility, the common map image is displayed on the screen instead of the detailed map of the neighborhood of the utility (see Patent Literature 1).

Also, there is known another navigation apparatus that, when an access road to the utility runs in close vicinity of a major road in parallel, a display of user's own car location can be corrected based on a choice of road classification made by the user on the operation portion (see Patent Literature 2).
Patent Literature 1: JP-A-1 0-122879 (pp.2 to 3, Fig.3)
Patent Literature 2: JP-A-2003-302238 (pp.3 to 4, Fig.1 and Fig.9)

### Disclosure of the Invention

### Problems that the Invention is to Solve

In the navigation apparatus set forth in Patent Literature 1, in the above situation that the access road to the public utility runs in close vicinity of the major road in parallel, actually the user's present location does not get close to the public utility, nevertheless this navigation apparatus decides that the user's present location is coming closer to the public utility. As a result, it is possible that the detailed map of the neighborhood of the utility is displayed instead of the common map image. In other words, even when the user is not going toward the public utility, this navigation apparatus cannot show the common map image to the user and thus an image the user does not need is displayed.

Also, in the navigation apparatus set forth in Patent Literature 2, since sometimes the user who is unfamiliar with the place makes a mistake in choosing the road classification, it is possible that the user cannot correct a display of his or her own car location. As a result, there is a possibility that, even in the situation the user can choose the road classification, the image the user does not need may be displayed.

### Means for Solving the Problems

A navigation apparatus of the present invention for causing a display to display a facility image regarding a facility ahead of user's present location, includes a control portion controls whether or not a facility image is displayed on a display, based on operation data output from an operation switch when location data contains plural corresponding destinations on map data. The interpretation of words and phrases in the present invention will be given as follows.

The term "facility" is a place that has an access road branched from the road. By way of example, there are an entrance/exit in an express highway, a toll road, or the like, a tollgate in an express highway, a toll road, or the like, a parking lot (containing a rest station) in an express highway, a toll road, or the like, a junction in an express highway, a toll road, or the like, a parking lot (containing a rest station) in an ordinary road, a parking lot of a store, and the like.

The term "facility image" is an image that is used to guide the facility. As an example, there are a map of a parking lot, and the like.

The term "location data" is a concept that contains GPS data and various data calculated from GPS data and other data. As "other data", there are speed data, azimuth data, and the like.

The term "map data" is data in which the roads or the facilities are correlated with their location data.

The wording "location data contains plural corresponding destinations on map data" means that two roads or facilities or more corresponding to the location data are present at least in the internal process. That is, there is uncertainty in the so-called map matching. This uncertainty is liable to arise in a branch point in the road, plural roads running in parallel mutually, a parking lot contiguous to the road, and the like.

Preferably, the "control portion" causes the display to display a switch image used to decide whether or not the facility image is displayed when the location data contains plural corresponding destinations on the map data. Here, the "switch image" is displayed to cause the user to decide whether or not the facility image should be displayed, and consists of a character(s), a figure(s), a color (s), and their combination. By way of example, there are an icon shaped like a button, and the like as the switch image.

Preferably, the "control portion" causes the display to display the facility image and delete the switch image from the display when a number of corresponding destinations is changed from plural to single. Here, the wording "a number of corresponding destinations is changed from plural to single" means that the road or the facility corresponding to the location data is defined solely at least in the internal process.

Preferably, the "control portion" causes the display to display the facility image and delete the switch image from the display when facility specifying data transmitted from a facility side is present in a storage medium. Here, the wording "facility specifying data transmitted from a facility side" indicates the data transmitted from the equipment provided on the facility side. It does not matter whether such data should be transmitted via radio or transmitted via light. The term "a facility side" is a concept that contains the facility itself and the access road connected to the facility.

### Advantage of the Invention

The present invention possesses such an advantage that, when the location data contains a plurality of corresponding destinations on the map data, it can be controlled based on the operation data output from the operation switch whether or not the facility image should be displayed on the display and thus the facility image can be displayed usefully to the user.

### Brief Description of the Drawings

[FIG.1] A configurative diagram showing a hardware configuration of the best mode for carrying out a navigation apparatus according to the present invention.
[FIG.2] A flowchart showing a flow of process in the present embodiment.
[FIG.3] A view explaining a relationship between a section and the number of corresponding destinations.
[FIG.4] (a) a view showing a display example of a road map in the present embodiment, (b) a view showing a superimposed display example of a switch image and the road map in the present embodiment, (c) a view showing a superimposed display example of the switch image and a facility image in the present embodiment, and (d) a view showing a display example of the facility image in the present embodiment.

### Description of Reference Numerals

- 1: navigation apparatus
- 14: CPU (control portion)
- 21: operation panel (operation switch)
- 32: display

### Best Mode for Carrying Out the Invention

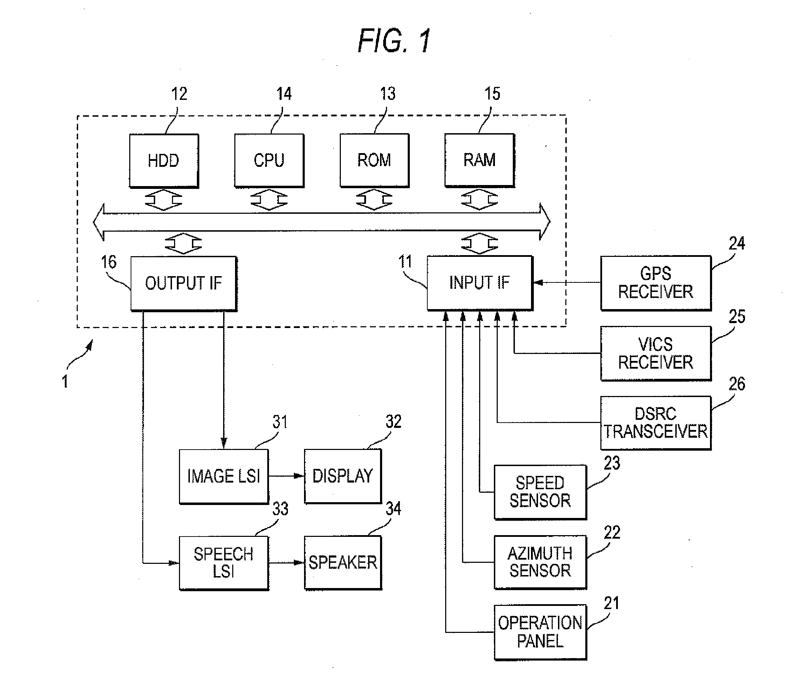

A best mode for carrying out the present invention will be explained with reference to FIG.1 to FIG.4 hereinafter.
<As for Configuration>

A configuration of a navigation apparatus according to the present embodiment will be explained with reference to FIG.1 hereunder. As shown in FIG.1, a navigation apparatus 1 includes an input IF 11 for receiving data from various devices, a HDD 12 for storing various data and programs, a ROM 13 for storing a basic program, a CPU 14 (corresponding to a "control portion") for executing the programs stored in the HDD 12, the ROM 13, and the like, a RAM 15 for holding data supplied from the input IF 11, the CPU 14, and the like, and an output IF 16 for outputting the data from the CPU 14, and the like to various devices. These devices are connected via a bus.

To the input IF 11 are connected an operation panel 21 (corresponding to an "operation switch") for outputting operation data corresponding to various operations made by the user, an azimuth sensor 22 for outputting data corresponding to an azimuth, a speed sensor 23 for outputting data corresponding to a moving speed, a GPS receiver 24 for receiving GPS data, a VICS receiver 25 for receiving VICS data transmitted by the radio wave beacon or the light beacon, and a DSRC transceiver 26 for receiving facility specifying data or road specifying data transmitted from a DSRC onroad station provided in the facility or near the exit of the facility. In the present embodiment, the data calculated from GPS data, data corresponding to an azimuth, data corresponding to a moving speed, and the like are employed as "location" data. Of course, simply the GPS data may be employed as "location" data.

To the output IF 16 are connected an image LSI 31 for causing a display 32 to display an image in answer to the data from the CPU 14, and a speech LSI 33 for causing a speaker 34 to output a speech in answer to the data from the CPU 14.

In the HDD 12 are stored map data in which the roads or the facilities are correlated with the location data, facility image data corresponding to facility images, road map data corresponding to road maps, switch image data corresponding to switch images, and the like. Also, an image display program for causing the CPU 14 to function as the control portion that controls whether or not the facility image should be displayed on the display 32, in response to the operation data output from the operation panel 21, when the location data has a plurality of corresponding destinations on the map data is stored in the HDD 12.

### <As for Process>

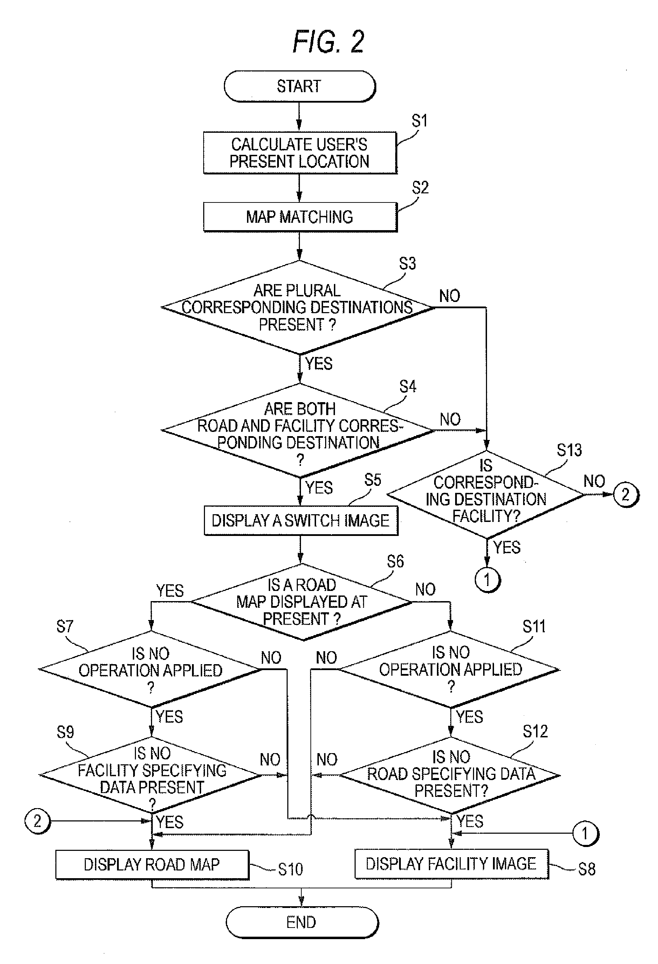

An operation of the navigation apparatus 1 constructed as above will be explained with reference to FIG.2 to FIG.4 hereunder. As shown in FIG.2, the CPU 14 decompresses the image displaying program stored in the HDD 12 on the RAM 15, and executes following processes.

The CPU 14 calculates the present location of a mobile body by using the data that are output from various devices connected to the input IF 11 (step S1). Here, the calculated result is held in the RAM 15 as the location data.

If the present location is calculated in step S1, the CPU 14 searches the corresponding destination to the location data on the map data (referred to as the "corresponding destination" hereinafter) by using the map data stored in the HDD 12 and the location data held in the RAM 15 (step S2). That is, the so-called map matching is executed. Concretely the corresponding destination is derived by comparing the location of the mobile body, the moving direction, and locus profiles within a particular section in the past with road profiles on the map data, while taking account of distance errors contained in various devices, the azimuth error, and the like. The data of the corresponding destination is held in the RAM 15.

If the corresponding destination is calculated in step S2, the CPU 14 decides whether or not a plurality of corresponding destinations are present, by using the data of the corresponding destination held in the RAM 15 (step S3). Normally, when a plurality of corresponding destinations are present, a certainty of the presence of the corresponding destinations is calculated respectively and then the location whose certainty of the presence is maximum is decided as the location displayed on the map. In other words, even when a plurality of corresponding destinations are present, only one present location mark is displayed on the display 32.

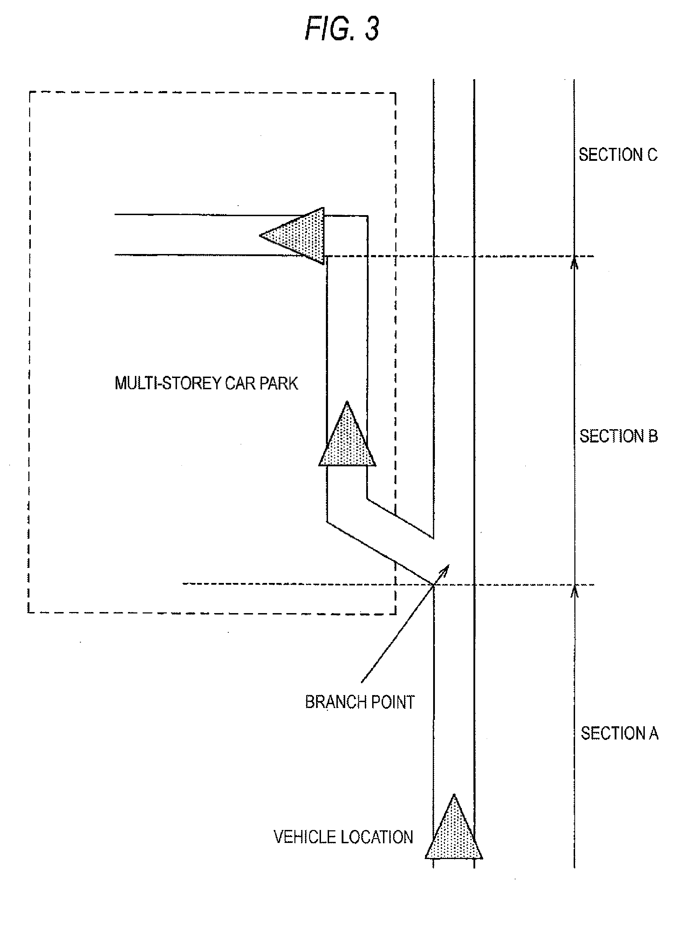

If it is decided in step S3 that a plurality of corresponding destinations have been present (Yes in S3), the CPU 14 decides whether or not both the road and the facility are present as the corresponding destination, by using the data about the result in step S2 (step S4). In particular, as shown in FIG.3, when the facility is a multi-storey car park, a section A is an area that is located on this side of a branch point P in the road between the entering direction into the multi-storey car park and the direction along the road. A section B is an area in which an access road connected to the multi-storey car park and the road run in parallel. A section C is an area in which the access road runs in the different direction from the road and is connected to the multi-storey car park. Also, only the road exists as the corresponding destination in the section A. Also, both the facility and the road exist as the corresponding destination in the section B. Also, only the facility exists as the corresponding destination in the section C because the running direction of the access road to the multi-storey car park is largely different from the direction along the road.

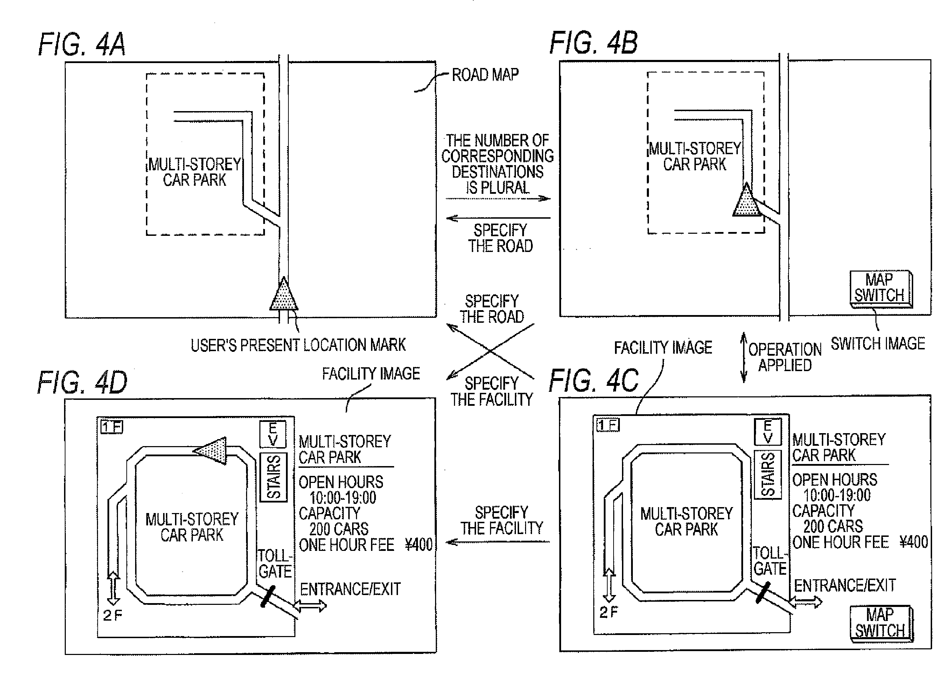

If it is decided in step S4 that not both the road and the facility are present as the corresponding destination (Yes in S4), the CPU 14 causes the display 32 to display a switch image corresponding the switch image data stored in the HDD 12 (step S5). Concretely, the image LSI 31 causes the display 32 to display the switch image corresponding the switch image data in answer to the data from the CPU 14. Then, a screen of the display 32 is shifter from a state where only the road map is displyed (see FIG.4(a)) to a state where the switch image is superimposed on the road map (see FIG.4(b)).

If the switch image is displayed on the display 32 in step 5, the CPU 14 decides to which one of the road map and the facility image the image being displayed at present on the display 32 corresponds (step S6).

If it is decided in step S6 that the image being displayed on the display 32 corresponds to the road map (Yes in S6), the CPU 14 decides whether or not the operation data output from the operation panel 21 is not present in the RAM 15 (step S7). At this time, the operation data is the data that responds to a display request of the facility image.

If it is decided in step S7 that the operation data is present in the RAM 15 (No in S7), i.e., if the display of the facility image is requested, the CPU 14 causes the display 32 to display the facility image corresponding to the facility image data stored in the HDD 12 (step S8).

More particularly, the image LSI 31 causes the display 32 to display the facility image corresponding to the facility image data, in answer to the data from the CPU 14. Then, the screen of the display 32 is shifted from a state where the switch image is superimposed on the road map (see FIG.4(b)) to a state where the switch image is superimposed on the facility image (see FIG.4(c)). In the present embodiment, as the facility image, not only positional relationships between a tollgate of the multi-storey car park, a stairs, and the like are illustrated but also character information relating to the facility such as open hours of the multi-storey car park, fee information, and the like are displayed. Of course, when the display of the facility image is requested, the screen of the display 32 may be shifted from a state where the switch image is superimposed on the road map (see FIG.4(b)) to a state where only the facility image is displayed (see FIG.4(d)). Also, if the facility specifying data is present in the RAM 15, the screen of the display 32 may be shifted from a state where the switch image is superimposed on the facility image (see FIG.4(c)) to a state where only the facility image is displayed (see FIG.4(d)).

In contrast, if it is decided in step S7 that the operation data is not present in the RAM 15 (Yes in S7), i.e., if the display of the facility image is not requested, the CPU 14 decides whether or not the facility specifying data is not present in the RAM 15 (step S9). Here, the presence of the facility specifying data indicates that the mobile body is approaching the facility.

If it is decided in step S9 that the facility specifying data is present (No in S9), the CPU 14 executes the process in step S8. Then, the screen of the display 32 is shifted from a state where the switch image is superimposed on the road map (see FIG.4(b)) to a state where only the facility image is displayed (see FIG.4(d)).

In contrast, if it is decided in step S9 that the facility specifying data is not present (Yes in S9), the CPU 14 causes the display 32 to display the road map corresponding to the road map data stored in the HDD 12 (step S10).

If it is decided in step S6 that the image being displayed on the display 32 is the facility image (No in S6), the CPU 14 decides whether or not the operation data output from the operation panel 21 is not present in the RAM 15 (step S11). At this time, the operation data is the data that responds to the display request of the road map.

If it is decided in step S11 that the operation data is present in the RAM 15 (No in S11), i.e., if the display of the road map is requested, the CPU 14 executes the process in step S10. Then, the screen of the display 32 is shifted from a state where the switch image is superimposed on the facility image (see FIG.4(c)) to a state where the switch image is superimposed on the road map (see FIG.4(b)).

In contrast, if it is decided in step S11 that the operation data is not present in the RAM 15 (Yes in S11), i.e., if the display of the road map is not requested, the CPU 14 decides whether or not the road specifying data is not present in the RAM 15 (step S12). Here, the presence of the road specifying data indicates that the moving body leaves the facility and is going toward the road.

If it is decided in step S12 that the road specifying data is present (No in S12), the CPU 14 executes the process in step S10. Then, the screen of the display 32 is shifted from a state where the switch image is superimposed on the facility image (see FIG.4(c)) to a state where only the road map is displayed (see FIG.4(a)).

In contrast, if it is decided in step S12 that the road specifying data is not present (Yes in S12), the CPU 14 executes the process in step S8 and causes the display 32 to display the facility image corresponding to the facility image data stored in the HDD 12.

Then, if it is decided in step S3 that the number of corresponding destinations is single (No in S3) or if it is decided in step S4 that both the facility and the road do not correspond to the corresponding destination (No in S4), the CPU 14 decides whether or not the corresponding destination is the facility, by using the data of the result in step S2 (step S13).

If it is decided in step S13 that the corresponding destination is the facility (Yes in S13), the CPU 14 executes the process in step S8. In contrast, if it is decided in step S13 that the corresponding destination is not the facility (No in S13), the CPU 14 executes the process in step S10.
<Advantages of the Present Embodiment>

With the above, according to the present embodiment, in the section B in which the access road connected to the multi-storey car park and the road run in parallel, the display 32 receives the request for the display of the facility image from the operation panel 21 and displays the facility image. Namely, the internal process sets the user's present location on the access road, nevertheless the facility image of the multi-storey car park ahead of the access road is not automatically displayed when actually the user's present location locates on the road. Therefore, this navigation apparatus can show usefully the facility image to the user. Also, this navigation apparatus never arises a sense of discomfort about the display of the facility image in the user.

According to the present embodiment, in the section in which the access road connected to the multi-storey car park and the road run in parallel, the display 32 displays the switch image to be superimposed on the road map. Therefore, this navigation apparatus can call upon the user to execute the operation that is required to display the facility image.

According to the present embodiment, when the mobile body moves from the section B to the section C, i.e., when the entering of the mobile body into the multi-storey car park becomes certain, the display 32 switches the screen from the road map to the facility image and deletes the switch image from the display. Therefore, the display 32 can display automatically the facility image as soon as the access road connected to the multi-storey car park does not run in parallel with the road.

In the present embodiment, when the facility specifying data is present in the storage medium such as VICS, or the like, i.e., when the entering of the mobile body into the multi-storey car park becomes certain, the display 32 switches the screen from the road map to the facility image and deletes the switch image from the display. Therefore, if the facility specifying data is transmitted from the facility, the display 32 can display automatically the facility image even in the section in which the access road connected to the multi-storey car park and the road run in parallel.

### <Variation>

In the present embodiment, the facility specifying data is used in step S9. But it may be defined by another approach whether or not the mobile body is entering into the facility. For example, when the HDD 12 stores a regulation speed table that correlates the access roads with their regulation speeds, the entering of the mobile body into the facility may be defined by comparing the speed data output from the speed sensor 23 with the data in the regulation speed table. According to this variation, even when the beacon, or the like is not provided to the facility, the facility image can be displayed automatically in the section where the access road connected to the multi-storey car park and the road run in parallel.

In the present embodiment, explanation of the voice guidance is not made. But the speaker 34 may output the voice guidance "The display is switched into a multi-storey car park map", or the like when the display of the road map is switched into the display of the facility image.

The present invention is explained in detail with reference to the particular embodiments as above. But it is apparent for those skilled in the art that various variations and modifications can be applied without departing from a spirit and a scope of the present invention.
This application is based upon Japanese Patent Application (Patent Application No.2005-129295) filed on April 27, 2005; the entire contents of which are incorporated herein by reference.

### Industrial Applicability

As described above, the present invention possesses such an advantage that the facility image can be displayed usefully to the user, and is useful to the onboard multimedia terminal, the cellular phone, and the like.

## Claims

1. A navigation apparatus for causing a display to display a facility image regarding a facility ahead of user's present location, comprising:
a control portion that controls whether or not the facility image is displayed on a display, based on operation data output from an operation switch, when location data contains a plurality of corresponding destinations on map data.

2. The navigation apparatus according to claim 1, wherein the control portion causes the display to display a switch image used to decide whether or not the facility image is displayed, when the location data contains the plurality of corresponding destinations on the map data.

3. The navigation apparatus according to claim 2, wherein the control portion causes the display to display the facility image and delete the switch image from the display when a number of corresponding destinations is changed from plural to single.

4. The navigation apparatus according to claim 2, wherein the control portion causes the display to display the facility image and delete the switch image from the display when facility specifying data transmitted from a facility side is present in a storage medium.
